# EUROPEAN PATENT APPLICATION

(11) **EP 4 249 975 A1**
(43) Date of publication of application: **27.09.2023**
(21) Application number: 23157376.7
(22) Date of filing: 17.02.2023
(51) Int. Cl.: G02B 6/44

(54) **INNERDUCT FOR FIBEROPTIC CABLES AND ITS METHOD OF MANUFACTURE**

(30) Priority: 25.03.2022 US 202263323733 P; 11.01.2023 US 202318095608
(71) Applicant: WESCO Equity Corporation, Wilmington, DE 19808 (US)
(72) Inventor: ALLEN, Jerry L., Delaware, 34236 (US)
(74) Representative: Bone, Alexander Marcus Thomas

(57) **Abstract**

A duct for insertion into a conduit or to be buried in the ground includes a sheet of material having complementary connectors on its edges. The sheet may be corrugated and after a cable is placed adjacent to it, the connectors are connected to form the duct with the cable therein. Alternatively, the sheet may be horseshoe shaped and the cable inserted between its edges to be confined therein after the connectors connect with each other.

## Description

### CROSS-REFERENCE TO RELATED APPLICATION

This application claims priority from U.S. Provisional Patent Application Serial No. 63/323,733 filed on March 25, 2022, which is incorporated herein by reference in its entirety.

### TECHNICAL FIELD

This invention relates to a duct which can be positioned in an underground conduit or buried directly in the ground, and which receives a fiberoptic cable or the like therein. More particularly, this invention relates to such a duct which can be easily installed in a conduit without spiraling, and which can have a cable positioned therein prior to the installation.

### BACKGROUND ART

The communications industry most often utilizes underground conduits to house its communication cables, such as fiberoptic cables. Traditionally, one or more innerducts are provided in the conduit, each of which carry a cable. One such type of innerduct is constructed of a rigid high density polyethylene (HDPE). Such tubular innerducts are extruded and while still hot are put on reels which might hold as much as twenty-five hundred feet of the product. The innerduct then cools on the reel and is ready to be installed in a conduit to subsequently receive a cable therein.

However, such innerducts are fraught with problems. These innerducts have "reel memory" such that as they come off the reel to be positioned in a conduit, they will spiral during placement. Such spiraling makes it difficult to insert the innerduct, and at a later date makes it more difficult to insert a cable into the innerduct. Moreover, since most conduits are designed to receive multiple innerducts, an existing spiraling innerduct in a conduit makes it extremely difficult to place additional innerducts in the conduit.

Thus, the need exists for a rigid innerduct, made of HDPE or an equivalent material, which will not spiral upon insertion into a conduit. Moreover, the need exists to provide such an innerduct which can carry a cable prior to being installed in a conduit so that the innerduct and cable are inserted simultaneously into the conduit, and which could alternatively be inserted directly in the ground.

### DISCLOSURE OF THE INVENTION

It is thus an object of one aspect of the present invention to provide a rigid innerduct which can be inserted into a conduit without spiraling.

It is an object of another aspect of the invention to provide a rigid innerduct, as above, which can have a cable positioned therein during its construction so that the innerduct and cable can be inserted simultaneously into a conduit.

It is an object of an additional aspect of the invention to provide a duct, as above, which could also be inserted directly in the ground as opposed to in an underground conduit.

These and other objects of the present invention, as well as the advantages thereof over existing prior art forms, which will become apparent from the description to follow, are accomplished by the improvements hereinafter described and claimed.

In general, an apparatus adapted to be inserted into a conduit or into the ground includes a sheet of a polymeric semi-rigid material having edges. Complementary connectors extend outwardly from each edge of the material such that when the connectors are attached to each other, a tubular duct is formed.

In accordance with another aspect of the invention, a duct adapted to be inserted into a conduit includes a longitudinally extending corrugated sheet of semi-rigid material, a cable, and complementary connectors extend outwardly from each lateral edge of the sheet. When the connectors are attached to each other, the duct is formed by having a cable therein.

In accordance with the method of the present invention, a duct is formed by the steps of providing a longitudinally extending polymeric sheet of material having complementary connectors at its lateral edges. A cable is placed adjacent to the material and the connectors are attached to form the duct with the cable therein.

Preferred exemplary ducts according to the concepts of the present invention which can be formed by the method of the present invention are shown by way of example in the accompanying drawings without attempting to show all the various forms and modifications in which the invention might be embodied, the invention being measured by the appended claims and not by the details of the specification.

### BRIEF DESCRIPTION OF THE DRAWINGS

Fig. 1 is a fragmented plan view of a sheet of material used to make an innerduct in accordance with one aspect of the present invention.
Fig. 2 is a sectional view taken substantially along line 2-2 of Fig. 1.
Fig. 3 is a view similar to Fig. 2 and showing a cable being positioned adjacent to the material.
Fig. 4 shows the ends of the material of Fig. 2 being connected to confine the cable therein.
Fig. 5 is similar to Fig. 2 but showing an alternative embodiment of the present invention.
Fig. 6 is a view of the alternative embodiment of Fig. 5 and showing a cable being positioned adjacent to the material.
Fig. 7 is a view of the alternative embodiment of Fig. 5and shows the ends of the material of Fig. 5 being connected to confine the cable therein.
Fig. 8 is an end view of yet another alternative embodiment of the present invention.
Fig. 9 is a view similar to Fig. 8 and showing a cable being inserted into an opening between the ends of the material.
Fig. 10 shows the ends of the material of Fig. 8 being connected to confine the cable therein.
Fig. 11 is a somewhat schematic rendition of a prior art innerduct showing it spiraling in a conduit.
Fig. 12 is a somewhat schematic rendition of innerducts of the present invention showing that they do no spiral in a conduit.

### PREFERRED EMBODIMENTS FOR CARRYING OUT THE INVENTION

A sheet of material is generally indicated by the numeral 10, and is preferably made of a polymeric material such as a thermoplastic, an example of which is HDPE. Thus, material 10 is a thermoplastic having sufficient rigidity to hold its shape while having sufficient flexibility to be bent into a tubular shape as will hereinafter be described. The degree of flexibility of such material depends, to some extent, on the thickness thereof. Material 10 extends longitudinally for some length, often 2500 feet or more, and it can be stored on a reel and taken to a site where it will eventually be formed into an innerduct and installed in a conduit.

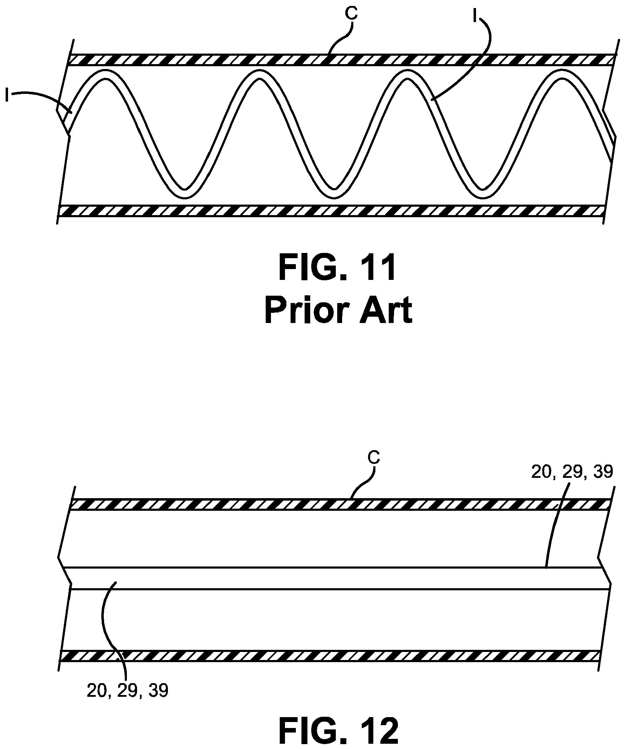

A traditional HDPE innerduct I, shown in prior art Fig. 11, is formed as a tube in the extrusion process and is hot when placed on a reel. When it cools it has reel memory. As such, when it is placed in an outer conduit C it will spiral, left and right and up and down, in the conduit C as shown in Fig. 11. Such spiraling not only makes it difficult to place the innerduct I in the conduit C, but also the spiraling causes difficulties in placing a fiberoptic cable into the innerduct or in placing additional innerducts into the conduit.

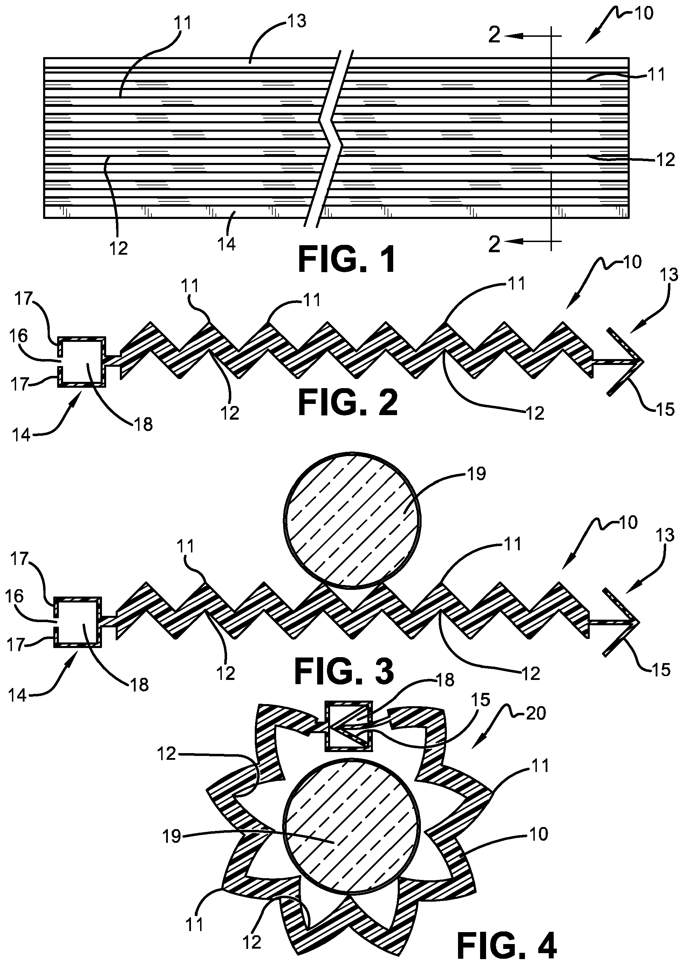

In the present invention, as shown in Figs 2-4, material 10 can be constructed of a thin sheet of HDPE or equivalent material having a corrugated or ribbed configuration with opposed and alternating in peaks 11 and valleys 12. A sheet of HDPE with a thickness of approximately 0.0625 inch has been found suitable for the purposes of the present invention. When the material is placed on a reel, and because of its thin and ribbed nature, when it comes off of the reel, it will have no reel memory and will easily be inserted into a conduit without spiraling.

To that end, complementary connectors, generally indicated by the numerals 13 and 14, extend longitudinally along the lateral edges of material 10. As somewhat schematically shown, connector 13 can be in the form of a hook or barb, and connector 14 can be in the form of a socket. Thus, connector 13 can take the shape of an arrow 15 which compresses as it passes through an opening 16 in connector 14 defined by lugs 17. Then when arrow 15 passes lugs 17, it flexes back to its original configuration to be located in cavity 18 of connector 14. Of course, other complementary connectors, such as a ball and socket configuration, a VELCRO^{®} with a hook and loop connection, or equivalent devices, could be employed without departing from the concept of the invention.

Before connectors 13 and 14 are attached, as just described, a cable 19 can be positioned adjacent to, and generally laterally centered along, material 10 as shown in Fig. 3. Then material 10 may be shaped around cable 19 and the connectors 13 and 14 attached to each other as shown in Fig. 4. Such forms an innerduct 20 with the cable 19 positioned therein.

This assembly of innerduct 20 can be accomplished at an access site of an underground conduit. To do so, a roll of cable 19 and a roll of material 10 can be supplied at the conduit introduction site. Then they are fed through a device (not shown) which can wrap the material 10 around the cable 19 as it is being pulled into the conduit by means of a pull rope already installed in the conduit. Such a device is similar to the apparatus shown in U.S. Patent Application Serial No. 17/475,693 reference to which is incorporated herein for a better understanding of the manner in which innerduct 20 is assembled and inserted into a conduit. If desired, a pull tape (not shown) can be positioned adjacent to innerduct 20 and can be installed in the conduit at the same time as innerduct 20 so that it is available for installation of another innerduct into the conduit at a later date as may be desired.

As previously described, and as shown in Fig. 12, because the construction of material 10, innerduct 20 will not spiral when being inserted into a conduit C, and because the cable 19 is being installed with it, an installation step is eliminated. That is, the practice of the prior art was to first insert an HDPE tube, and then insert a cable into that tube.

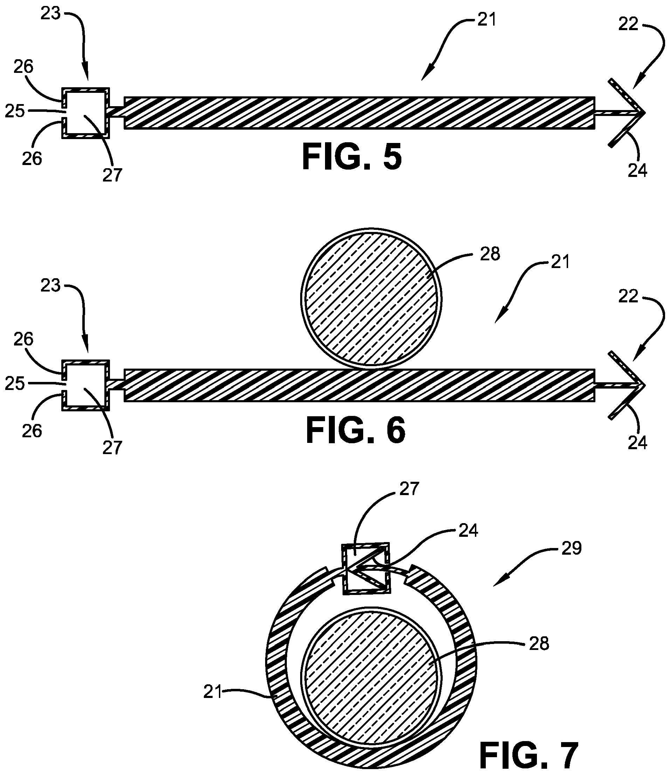

Another embodiment of the present invention is shown in Figs. 5-7. There, the sheet of material, generally indicated by the numeral 21, is not of a corrugated or ribbed material 10, but rather it is of a thin and planar cross-section. Like the ribbed configuration, it will have no reel memory when being discharged from its storage reel.

Like the embodiment of Figs. 2-4, complementary connectors 22 and 23 extend longitudinally along the lateral edges of material 21. These connectors can also be in the form of a hook and socket combination. Thus, connector 22 can take the shape of an arrow 24 which compresses as it passes through an opening 25 in connector 23 defined by lugs 26. Then when arrow 24 passes lugs 26, it flexes back to its original configuration to be located in a cavity 27 of connector 23. Of course, other complementary connectors, such as a ball and socket, a VELCRO^{®} with hook and loop connection, or equivalent devices, could be employed without departing from the concept of the invention.

Before connectors 22 and 23 are attached, as just described, a cable 28 can be positioned adjacent to, and generally laterally centered along, material 21 as shown in Fig. 6. Then material 21 may be shaped around cable 28 and the connectors 22 and 23 may be attached to each other as shown in Fig. 7. Such forms innerduct 29 with the cable 28 positioned therein.

Innerduct 29 may be constructed at a conduit access site in the same manner as innerduct 20, and as shown in Fig. 12, because of the nature of material 21, it will not spiral when being inserted into a conduit C.

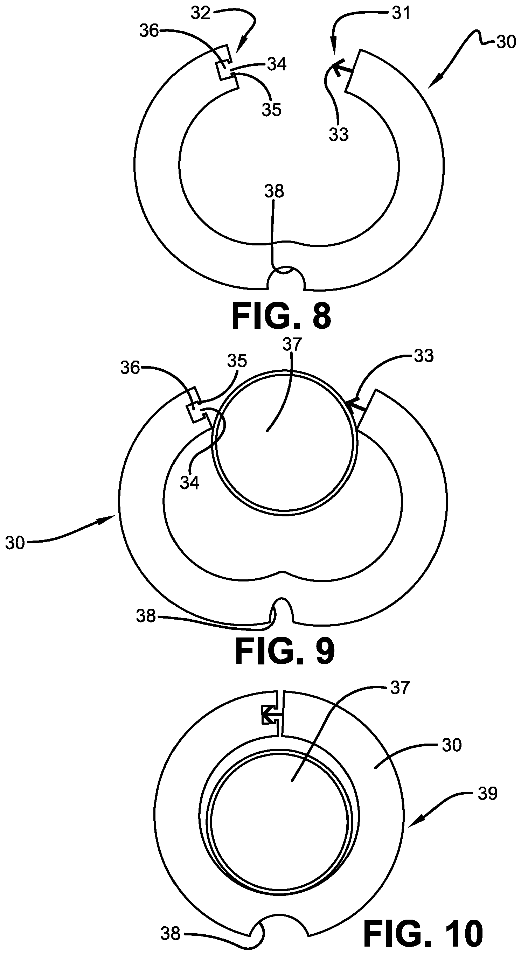

An additional embodiment of the present invention is shown in Figs. 8-10. Although the embodiments just described could be inserted directly in the ground, this embodiment is best suited for that purpose. Thus, an HDPE or equivalent material is formed in a general horseshoe shape and is generally indicated by the numeral 30. The thickness of material 30 is shown as being greater than that of the materials 10 or 21 and thus it is not as flexible as those materials. This thickness could be approximately 0.125 inch to serve the purpose of this embodiment.

Complementary connectors 31 and 32 are formed on the open ends of material 30. These connectors can also be in the form of a hook and socket combinations. Thus, connector 31 can take the shape of an arrow 33 which compresses as it passes through an opening 34 in connector 32 defined by lugs 35. Then when arrow 33 passes lugs 35, it flexes back to its original configuration to be located in cavity 36 of connectors 32. Of course, other complementary connectors, such as a ball and socket, a VELCRO^{®} with hook and loop connection, or equivalent devices, could be employed without departing form the concept of the invention.

Before connectors 31 and 32 are attached to each other, a cable 37 can be received within material 30 by passing it through the opening between the open ends of material 30, as somewhat schematically shown in Fig. 9. Then the connectors can be urged toward each other as the material 30 bends on a notch 38 formed at the bottom of its horseshoe shape. Material 30 can be bent until the connectors 31 and 32 forming a duct 39 having the cable 37 confined in it. The duct and cable may then be buried directly in the ground, or the duct may be used as an innerduct for an underground conduit, and will not spiral upon placement into a conduit C.

In view of the foregoing description, it should be evident that a device constructed and used as described herein accomplishes the objects of the present invention and otherwise substantially improves the art.

## Claims

1. Apparatus adapted to be inserted into a conduit or into the ground comprising a sheet of a polymeric semi-rigid material having edges, and complementary connectors extending outwardly from each said edge such that when said connectors are attached to each other, a tubular duct is formed.

2. The apparatus of claim 1, wherein the sheet of material is corrugated having alternating peaks and valleys.

3. The apparatus of claim 1, wherein the material of the sheet is HDPE.

4. The apparatus according to claim 1, further comprising a cable positioned adjacent to said sheet so that when said connectors are attached to each other, said cable is in said tubular duct.

5. The apparatus according to claim 1, wherein said sheet is horseshoe shaped.

6. The apparatus according to claim 5, further comprising a cable inserted into the horseshoe shape between said connectors before said connectors are attached to each other.

7. A duct adapted to be inserted into a conduit comprising a longitudinally extending corrugated sheet of a semi-rigid material, a cable, and complementary connectors extending outwardly from each lateral edge of said sheet such that when said connectors are attached to each other the duct is formed having said cable therein.

8. The duct of claim 7, wherein the material of the sheet is HDPE.

9. The duct according to claim 7, wherein said sheet is horseshoe shaped.

10. A method of forming a duct having a cable therein comprising the steps of providing a longitudinally extending polymeric sheet of material having complementary connectors at the edges thereof, placing a cable adjacent to the material, and attaching the connectors to form the duct with the cable therein.

11. The method of claim 10, wherein the step of placing includes the step of placing the cable on the sheet.

12. The method of claim 10, wherein the material is in the shape of a horseshoe and the stop of placing includes the step of inserting the cable between the edges of the sheet.
